# EUROPEAN PATENT APPLICATION

(11) **EP 4 832 337 A1**
(43) Date of publication of application: **28.10.2026**
(21) Application number: 24921375.2
(22) Date of filing: 16.08.2024
(51) Int. Cl.: H02P 21/05, H02P 21/13, H02P 21/22, H02P 21/20, H02P 21/00, H02P 21/18

(54) **COMPRESSOR VIBRATION SUPPRESSION METHOD AND DEVICE, COMPRESSOR, AND STORAGE MEDIUM**

(30) Priority: 29.01.2024 CN 202410125469
(71) Applicant: Anhui Meizhi Compressor Co., Ltd., Hefei, Anhui Province 230088 (CN); Midea Welling Motor Technology (Shanghai) Co., Ltd., Shanghai 201203 (CN)
(72) Inventor: ZHENG, Zhihao, Hefei, Anhui 230088 (CN); YUE, Shuo, Hefei, Anhui 230088 (CN); WANG, Shaowei, Hefei, Anhui 230088 (CN); XU, Hao, Hefei, Anhui 230088 (CN); LIU, Tianyi, Hefei, Anhui 230088 (CN); FU, Junyong, Hefei, Anhui 230088 (CN); XU, Peilin, Hefei, Anhui 230088 (CN)
(74) Representative: Ran, Handong
(86) International application number: PCT/CN2024/112857
(87) International publication number: WO 2025/161349

(57) **Abstract**

The present application relates to the technical field of motor control, and discloses a compressor vibration suppression method and device, a compressor, and a storage medium. The method of the present invention comprises: determining an observed rotating speed by means of a position observer of a compressor; determining an estimated rotating speed according to a quadrature-axis current instruction outputted by a rotating speed loop PI controller of the compressor; determining observed torque on the basis of the observed rotating speed and the estimated rotating speed; and determining a compensation current instruction on the basis of the observed torque, and according to the compensation current instruction, controlling a motor system of the compressor to perform vibration suppression.

## Description

### CROSS-REFERENCE TO RELATED APPLICATIONS

This application claims priority to the Chinese Patent Application No. 202410125469.1, filed on January 29, 2024, the entire contents of which are incorporated herein by reference.

### TECHNICAL FIELD

The present application relates to the technical field of motor control, and in particular relates to a method and an apparatus for suppressing compressor vibration, a compressor and a storage medium.

### BACKGROUND

In a control system of a compressor, when the operating speed of the compressor decreases, the fluctuation frequency of the load torque of the compressor also decreases. Under the same structural inertia, the vibration amplitude of the compressor increases, the vibration and noise deteriorate, and the operation stability becomes poor at the same time. With the trend of lightweight and flat design of compressors, motor windings are changed from copper wires to aluminum wires, the inertia of the structure above the compressor base spring is reduced, the inherent vibration frequency of the compressor is increased, and the vibration and noise of the compressor are further deteriorated. A conventional compressor controller adopts a proportional-integral regulator to adjust the rotational speed. During low-frequency operation, due to load torque fluctuation, the rotational speed of the compressor has periodic fluctuation at mechanical frequency. The proportional-integral regulator has a slow response and cannot respond to and adjust the rotational speed fluctuation at mechanical frequency in a timely manner, resulting in that the rotational speed fluctuation during low-frequency operation cannot be effectively suppressed. The vibration and noise of the compressor during low-frequency operation deteriorate, the load capacity and stability are limited, and the operating range of the compressor is restricted.

The above content is only used to assist in understanding the technical solution of the present application, and does not represent that the above content is the prior art.

### SUMMARY

The main objective of the present application is to provide a method and an apparatus for suppressing compressor vibration, a compressor and a storage medium, aiming to solve the technical problems of vibration, noise and weak load capacity caused by load fluctuation during low-frequency operation of compressors in the related art.

To achieve the above objective, the present application provides a method for suppressing compressor vibration, and the method for suppressing compressor vibration includes:
determining an observed rotational speed through a position observer of a compressor;
determining an estimated rotational speed according to a quadrature-axis current command output by a speed loop PI regulator of the compressor;
determining an observed torque according to the observed rotational speed and the estimated rotational speed; and
determining a compensation current command according to the observed torque, and controlling a motor system of the compressor to perform vibration suppression according to the compensation current command.

In an embodiment, the determining the observed rotational speed through the position observer of the compressor includes:
collecting an observer angle of the position observer; and
calculating the observed rotational speed according to the observer angle.

In an embodiment, the determining the estimated rotational speed according to the quadrature-axis current command output by a speed loop PI regulator of the compressor includes:
determining the quadrature-axis current command through the speed loop PI regulator of the compressor; and
calculating the estimated rotational speed according to the quadrature-axis current command.

In an embodiment, the determining the quadrature-axis current command through the speed loop PI regulator of the compressor includes:
determining a speed loop proportional coefficient and a speed loop integral coefficient according to the speed loop PI regulator of the compressor;
obtaining a rotational speed command and a feedback rotational speed; and
calculating the quadrature-axis current command according to the speed loop proportional coefficient, the speed loop integral coefficient, the rotational speed command and the feedback rotational speed.

In an embodiment, the calculating the estimated rotational speed according to the quadrature-axis current command includes:
obtaining a torque coefficient and a moment of inertia; and
calculating the estimated rotational speed according to the torque coefficient, the moment of inertia and the quadrature-axis current command.

In an embodiment, the determining the observed torque according to the observed rotational speed and the estimated rotational speed includes:
obtaining an observer proportional coefficient and an observer integral coefficient of the position observer; and
determining the observed torque according to the observer proportional coefficient, the observer integral coefficient, the observed rotational speed and the estimated rotational speed.

In an embodiment, the determining the compensation current command according to the observed torque includes:
obtaining a torque coefficient and a low-pass filter cutoff frequency of the compressor; and
calculating the compensation current command according to the torque coefficient, the low-pass filter cutoff frequency and the observed torque.

Besides, in order to achieve the above objective, the present application further provides an apparatus for suppressing compressor vibration, including:
an observed rotational speed calculation module, configured to determine an observed rotational speed through a position observer of a compressor;
an estimated rotational speed calculation module, configured to determine an estimated rotational speed according to a quadrature-axis current command output by a speed loop PI regulator of the compressor;
an observed torque calculation module, configured to determine an observed torque according to the observed rotational speed and the estimated rotational speed; and
a vibration suppression module, configured to determine a compensation current command according to the observed torque, and control a motor system of the compressor to perform vibration suppression according to the compensation current command.

Besides, in order to achieve the above objective, the present application further provides a compressor, including: a memory, a processor and a compressor vibration suppression program stored in the memory and executable on the processor, the compressor vibration suppression program is configured to implement the method for suppressing compressor vibration as described above.

Besides, in order to achieve the above objective, the present application further provides a storage medium, a compressor vibration suppression program is stored on the storage medium, and the compressor vibration suppression program, when executed by a processor, implements the method for suppressing compressor vibration as described above.

### BRIEF DESCRIPTION OF THE DRAWINGS

FIG. 1 is a schematic structural diagram of a compressor involved in a hardware operating environment of a solution according to an embodiment of the present application.
FIG. 2 is a schematic flowchart of a method for suppressing compressor vibration according to a first embodiment of the present application.
FIG. 3 is a schematic flowchart of the method for suppressing compressor vibration according to a second embodiment of the present application.
FIG. 4 is a schematic structural block diagram of an apparatus for suppressing compressor vibration according to a first embodiment of the present application.

The objectives, functional features and advantages of the present application will be described below with reference to the embodiments and the accompanying drawings.

### DETAILED DESCRIPTION OF THE EMBODIMENTS

It should be understood that the specific embodiments described herein are only intended to explain the present application, and are not intended to limit the present application.

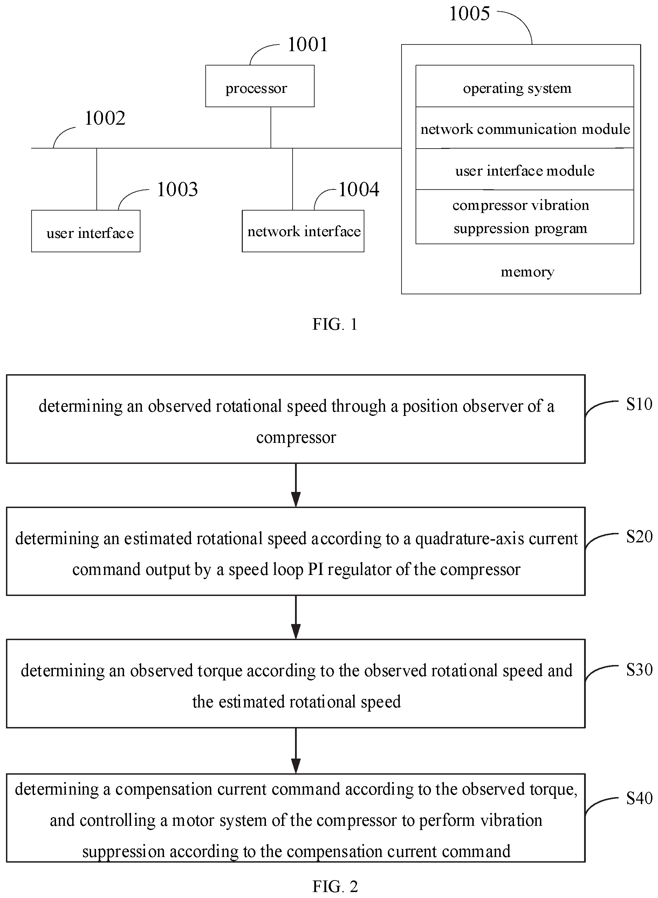

As shown in FIG. 1, and FIG. 1 is a schematic structural diagram of a compressor involved in a hardware operating environment according to an embodiment of the present application.

As shown in FIG. 1, the compressor may include a processor 1001, such as a Central Processing Unit (CPU), a communication bus 1002, a user interface 1003, a network interface 1004, and a memory 1005. The communication bus 1002 is configured to implement connection and communication between these components. The user interface 1003 may include a Display screen and an input unit such as a Keyboard. The user interface 1003 may further include standard wired interfaces and wireless interfaces. The network interface 1004 may include standard wired interfaces and wireless interfaces, such as Wireless-Fidelity (Wi-Fi) interfaces. The memory 1005 may be a high-speed Random Access Memory (RAM), or a stable NonVolatile Memory (NVM), such as a disk memory. The memory 1005 may also be a storage device independent of the foregoing processor 1001.

Those skilled in the art can understand that the structure shown in FIG. 1 does not constitute a limitation on the compressor, and may include more or fewer components than those shown in the figure, or combine some components, or arrange different components.

As shown in FIG. 1, the memory 1005 serving as a storage medium may include an operating system, a network communication module, a user interface module, and a compressor vibration suppression program.

In the compressor shown in FIG. 1, the network interface 1004 is mainly used for data communication with a network server; the user interface 1003 is mainly used for data interaction with a user; the processor 1001 and the memory 1005 in the compressor may be disposed inside the compressor, and the compressor invokes the compressor vibration suppression program stored in the memory 1005 through the processor 1001 to execute the method for suppressing compressor vibration provided by the embodiments of the present application.

An embodiment of the present application provides a method for suppressing compressor vibration. As shown in FIG. 2, FIG. 2 is a schematic flowchart of the method for suppressing compressor vibration according to a first embodiment of the present application.

In the embodiment, the method for suppressing compressor vibration includes the following steps:
S10, determining an observed rotational speed through a position observer of a compressor.

In an embodiment, the execution subject of the embodiment may be the compressor. The compressor has functions such as data processing, data communication and program operation, and the compressor may be any type of compressor, which is not limited in the embodiment. Certainly, it may also be other devices with similar functions, which is not limited in the embodiment. For ease of description, the compressor is taken as an example for illustration in the embodiment.

It should be noted that in a control system of a compressor, when the operating speed of the compressor decreases, the fluctuation frequency of the load torque of the compressor also decreases. Under the same structural inertia, the vibration amplitude of the compressor increases, the vibration and noise deteriorate, and the operation stability becomes poor at the same time. With the trend of lightweight and flat design of compressors, motor windings are changed from copper wires to aluminum wires, the inertia of the structure above the compressor base spring is reduced, the inherent vibration frequency of the compressor is increased, and the vibration and noise of the compressor are further deteriorated. A conventional compressor controller adopts a proportional-integral regulator to adjust the rotational speed. During low-frequency operation, due to load torque fluctuation, the rotational speed of the compressor has periodic fluctuation at mechanical frequency. The proportional-integral regulator has a slow response and cannot respond to and adjust the rotational speed fluctuation at mechanical frequency in a timely manner, resulting in that the rotational speed fluctuation during low-frequency operation cannot be effectively suppressed. The vibration and noise of the compressor during low-frequency operation deteriorate, the load capacity and stability are limited, and the operating range of the compressor is restricted. Therefore, optimizing the control strategy for load fluctuation during low-frequency operation of the compressor system is of important engineering practical significance for reducing the vibration and noise of the compressor during low-frequency operation and improving the low-frequency operating range and load carrying capacity of the compressor. According to the solution of the embodiment, an observed rotational speed is determined through a position observer of a compressor; an estimated rotational speed is determined according to a quadrature-axis current command output by a speed loop PI regulator of the compressor; an observed torque is determined according to the observed rotational speed and the estimated rotational speed; a compensation current command is determined according to the observed torque, and a motor system of the compressor is controlled to perform vibration suppression according to the compensation current command. In this way, the compensation current command is calculated based on the observed rotational speed and the estimated rotational speed, so as to realize the decoupling of rotational speed control and suppress the rotational speed fluctuation of the compressor during low-frequency operation, which is of important engineering practical significance for improving the low-frequency operating range and load carrying capacity of the motor.

The position observer refers to a position observer installed in a motor system of the compressor. The position observer is a rotor observer, the position observer is used to observe real-time position information of a rotor during the operation of the compressor and the motor system.

To accurately calculate the observed rotational speed, S10 includes: firstly collecting an observer angle of the position observer, and then calculating the observed rotational speed according to the observer angle.

In an embodiment, the calculation formula of the observed rotational speed ω_{m_obs} is as follows:
${ω}_{m _ obs} = \frac{{dθ}_{m _ obs}}{dt}$
where θ_{m_obs} is the observer angle of the position observer.

S20, determining an estimated rotational speed according to a quadrature-axis current command output by a speed loop PI regulator of the compressor.

It should be noted that the estimated rotational speed is calculated through the speed loop PI regulator installed on the compressor. In an embodiment, the quadrature-axis current command is firstly determined through the speed loop PI regulator, and then the quadrature-axis current command is substituted into a formula to calculate the estimated rotational speed.

S30, determining an observed torque according to the observed rotational speed and the estimated rotational speed.

After the observed rotational speed and the estimated rotational speed are determined, the observed torque of the entire motor system is determined by combining and calculating the observed rotational speed and the estimated rotational speed.

To accurately calculate the observed torque, an observer proportional coefficient and an observer integral coefficient of the position observer are firstly obtained, and then substituted with the observed rotational speed and the estimated rotational speed to calculate the observed torque.

In an embodiment, the calculation formula of the observed torque T_{L_est} is as follows:
${T}_{L _ est} = \left({ω}_{m _ est}-{ω}_{m _ est}\right) ⋅ \left({K}_{p _ est}+\frac{{K}_{i _ est}}{s}\right)$
where K_{p_est} is the observer proportional coefficient, and K_{i_est} is the observer integral coefficient.

S40, determining a compensation current command according to the observed torque, and controlling a motor system of the compressor to perform vibration suppression according to the compensation current command.

It should be noted that after the observed torque is obtained, the magnitude of the compensation current needs to be calculated according to the observed torque, and then the compensation current command is obtained based on the compensation current, so as to control the operation of the motor system according to the compensation current command, thereby realizing the decoupling of rotational speed control and suppressing the rotational speed fluctuation of the compressor during low-frequency operation.

To realize the calculation of the compensation current command, the calculating the compensation current command are as follows: firstly obtaining the torque coefficient of the compressor and the low-pass filter cutoff frequency, and then calculating the compensation current command according to the torque coefficient, the low-pass filter cutoff frequency and the previously calculated observed torque.

The calculation formula of the compensation current command I_{q_com} is as follows:
${I}_{q _ com} = LPF \left(\frac{{T}_{L _ est}}{{K}_{T}}\right)$
where T_{L_est} is the observed torque, K_{T} is the torque coefficient, and the low-pass filter cutoff frequency (LPF) is ω₀.

In the embodiment, the observed rotational speed is determined through the position observer of the compressor; the estimated rotational speed is determined according to the quadrature-axis current command output by the speed loop PI regulator of the compressor; the observed torque is determined according to the observed rotational speed and the estimated rotational speed; the compensation current command is determined according to the observed torque, and the motor system of the compressor is controlled to perform vibration suppression according to the compensation current command. In this way, the compensation current command is calculated based on the observed rotational speed and the estimated rotational speed, so as to realize the decoupling of rotational speed control and suppress the rotational speed fluctuation of the compressor during low-frequency operation, which is of important engineering practical significance for improving the low-frequency operating range and load carrying capacity of the motor.

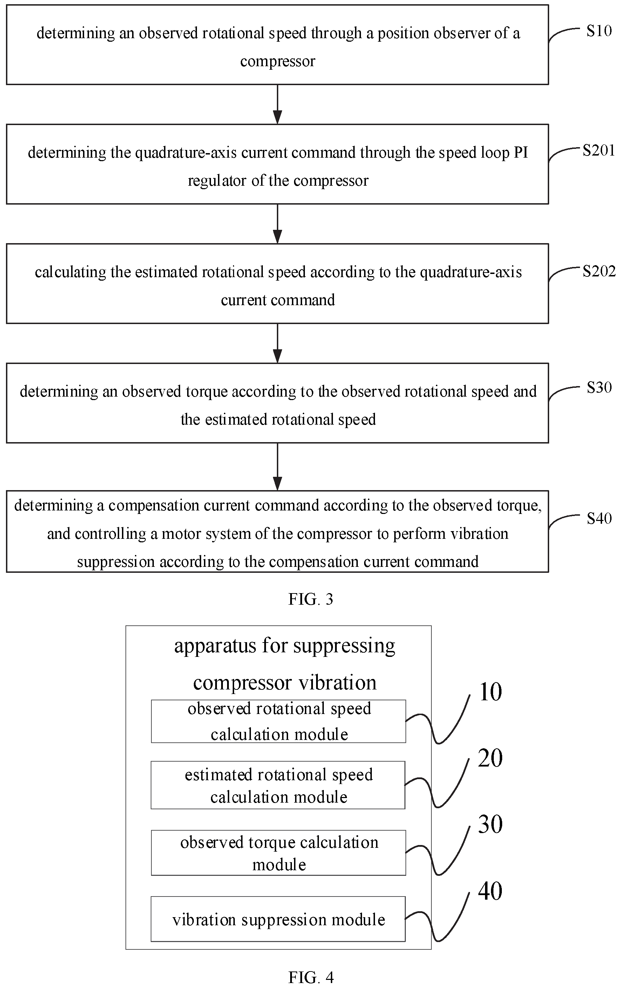

As shown in FIG. 3, FIG. 3 is a schematic flowchart of the method for suppressing compressor vibration according to a second embodiment of the present application.

Based on the first embodiment above, in an embodiment, the method for suppressing compressor vibration, S20 includes:
S201, determining the quadrature-axis current command through the speed loop PI regulator of the compressor.

It should be noted that the quadrature-axis current command is firstly determined based on a preset speed loop PI regulator. The speed loop PI regulator refers to a regulator adopting proportional control and integral control for the speed loop, the speed loop PI regulator is used to accurately control the current during the operation of the motor system. Preset functions and coefficients of proportional control and integral control are set in advance for automatic control.

In the proportional (P) control of the speed loop PI regulator, the output of the controller is in a proportional relationship with the input error signal. Once a deviation occurs, the controller acts immediately to adjust the output of the controller, so that the controlled variable changes in the direction of reducing the deviation. The larger Kp is, the faster the deviation decreases. However, it is easy to cause oscillation. When the delay link is large, the smaller Kp is, the lower the possibility of oscillation, and the slower the adjustment speed. Simple proportional control cannot eliminate steady-state error.

In an embodiment, in the integral (I) control of the speed loop PI regulator, the output of the controller is in a proportional relationship with the integral of the input error signal. To eliminate steady-state error, an integral term must be introduced into the controller. The elimination of error by the integral term depends on time integration, and the integral term increases as time elapses. In this way, even if the error is very small, the integral term will increase with time, which pushes the output of the controller to increase to further reduce the steady-state error until it is zero. However, integral I has a phase lag of 90 degrees, which reduces the phase margin, and common results are overshoot and oscillation. A Proportional-Integral (PI) controller can make the system have no steady-state error after entering a steady state.

To accurately calculate the quadrature-axis current command, S201 includes: firstly determining a corresponding speed loop proportional coefficient and a speed loop integral coefficient according to the speed loop PI controller, where the speed loop proportional coefficient and the speed loop integral coefficient are preset functions and coefficients, which are not limited in the embodiment.

After the relevant coefficients of the speed loop PI controller are determined, the rotational speed command executed by the motor at this time and the feedback rotational speed are obtained, and the feedback rotational speed is the operating rotational speed fed back by the motor of the compressor.

In an embodiment, after the speed loop proportional coefficient, the speed loop integral coefficient, the rotational speed command and the feedback rotational speed are obtained, the four parameters are combined and calculated to obtain the quadrature-axis current command.

The quadrature-axis current command is a q-axis current command, and the calculation formula of the q-axis current command Iq_asr is as follows:
${I}_{q _ asr} = \left({ω}_{m _ ref}-{ω}_{m _ fdb}\right) ⋅ \left({K}_{p _ asr}+\frac{{K}_{i _ asr}}{s}\right)$
where ω_{m_ref} is the rotational speed command, ω_{m_fdb} is the feedback rotational speed, s is the Laplace operator, K_{p_asr} is the speed loop proportional coefficient, and K_{i_asr} is the speed loop integral coefficient.

S202, calculating the estimated rotational speed according to the quadrature-axis current command.

It should be noted that after the quadrature-axis current command is obtained, the quadrature-axis current command is substituted into a mechanical model to calculate the estimated rotational speed.

To accurately calculate the estimated rotational speed, S202 includes: firstly obtaining a torque coefficient and a moment of inertia, and then calculating the estimated rotational speed according to the torque coefficient, the moment of inertia and the quadrature-axis current command.

The calculation formula of the estimated rotational speed ω_{m_est} is as follows:
${ω}_{m _ est} = \frac{{I}_{q _ asr} ⋅ {K}_{T} - {T}_{L _ est}}{Js}$
where K_{T} is the torque coefficient, T_{L_est} is the observed torque, J is the moment of inertia, and s is the Laplace operator.

In the embodiment, the quadrature-axis current command is determined through the speed loop PI regulator of the compressor; the estimated rotational speed is calculated according to the quadrature-axis current command. In this way, the quadrature-axis current command is calculated based on the preset speed loop PI regulator, and then the specific estimated rotational speed is calculated in combination with the quadrature-axis current command, which realizes accurate calculation of the estimated rotational speed, facilitates the subsequent calculation of the observed torque in combination with the observed rotational speed, and further realizes vibration suppression through rotational speed self-decoupling of the compressor.

In addition, an embodiment of the present application further proposes a storage medium. The storage medium stores a compressor vibration suppression program, and the compressor vibration suppression program, when executed by a processor, implements the method for suppressing compressor vibration as described above.

Since the storage medium adopts all technical solutions of all the foregoing embodiments, it at least has all the beneficial effects brought by the foregoing embodiments, which will not be repeated herein.

As shown in FIG. 4, FIG. 4 is a schematic structural block diagram of the apparatus for suppressing compressor vibration according to a first embodiment of the present application.

As shown in FIG. 4, the apparatus for suppressing compressor vibration provided by the embodiment of the present application includes: an observed rotational speed calculation module 10, an estimated rotational speed calculation module 20, an observed torque calculation module 30, and a vibration suppression module 40.

The observed rotational speed calculation module 10 is configured to determine an observed rotational speed through a position observer of a compressor.

In an embodiment, the execution subject of the embodiment may be the compressor. The compressor has functions such as data processing, data communication and program operation, and the compressor may be any type of compressor, which is not limited in the embodiment. Certainly, it may also be other devices with similar functions, which is not limited in the embodiment. For ease of description, the compressor is taken as an example for illustration in the embodiment.

It should be noted that in a control system of a compressor, when the operating speed of the compressor decreases, the fluctuation frequency of the load torque of the compressor also decreases. Under the same structural inertia, the vibration amplitude of the compressor increases, the vibration and noise deteriorate, and the operation stability becomes poor at the same time. With the trend of lightweight and flat design of compressors, motor windings are changed from copper wires to aluminum wires, the inertia of the structure above the compressor base spring is reduced, the inherent vibration frequency of the compressor is increased, and the vibration and noise of the compressor are further deteriorated. A conventional compressor controller adopts a proportional-integral regulator to adjust the rotational speed. During low-frequency operation, due to load torque fluctuation, the rotational speed of the compressor has periodic fluctuation at mechanical frequency. The proportional-integral regulator has a slow response and cannot respond to and adjust the rotational speed fluctuation at mechanical frequency in a timely manner, resulting in that the rotational speed fluctuation during low-frequency operation cannot be effectively suppressed. The vibration and noise of the compressor during low-frequency operation deteriorate, the load capacity and stability are limited, and the operating range of the compressor is restricted. Therefore, optimizing the control strategy for load fluctuation during low-frequency operation of the compressor system is of important engineering practical significance for reducing the vibration and noise of the compressor during low-frequency operation and improving the low-frequency operating range and load carrying capacity of the compressor. According to the solution of the embodiment, an observed rotational speed is determined through a position observer of a compressor; an estimated rotational speed is determined according to a quadrature-axis current command output by a speed loop PI regulator of the compressor; an observed torque is determined according to the observed rotational speed and the estimated rotational speed; a compensation current command is determined according to the observed torque, and a motor system of the compressor is controlled to perform vibration suppression according to the compensation current command. In this way, the compensation current command is calculated based on the observed rotational speed and the estimated rotational speed, so as to realize the decoupling of rotational speed control and suppress the rotational speed fluctuation of the compressor during low-frequency operation, which is of important engineering practical significance for improving the low-frequency operating range and load carrying capacity of the motor.

The position observer refers to a position observer installed in a motor system of the compressor. The position observer is a rotor observer, the position observer is used to observe real-time position information of a rotor during the operation of the compressor and the motor system.

To accurately calculate the observed rotational speed, the observed rotational speed calculation module 10 is further configured to collect an observer angle of the position observer; and calculate the observed rotational speed according to the observer angle.

The calculation formula of the observed rotational speed ω_{m_obs} is as follows:
${ω}_{m _ obs} = \frac{{dθ}_{m _ obs}}{dt}$
where θ_{m_obs} is the observer angle of the position observer.

The estimated rotational speed calculation module 20 is configured to determine an estimated rotational speed according to a quadrature-axis current command output by a speed loop PI regulator of the compressor.

It should be noted that the estimated rotational speed is calculated through the speed loop PI regulator installed on the compressor. In an embodiment, the quadrature-axis current command is firstly determined through the speed loop PI regulator, and then the quadrature-axis current command is substituted into a formula to calculate the estimated rotational speed.

The observed torque calculation module 30 is configured to determine an observed torque according to the observed rotational speed and the estimated rotational speed.

After the observed rotational speed and the estimated rotational speed are determined, the observed torque of the entire motor system is determined by combining and calculating the observed rotational speed and the estimated rotational speed.

To accurately calculate the observed torque, the observed torque calculation module 30 is further configured to obtain an observer proportional coefficient and an observer integral coefficient of the position observer; and determine the observed torque according to the observer proportional coefficient, the observer integral coefficient, the observed rotational speed and the estimated rotational speed.

The calculation formula of the observed torque T_{L_est} is as follows:
${T}_{L _ est} = \left({ω}_{m _ est}-{ω}_{m _ est}\right) ⋅ \left({K}_{p _ est}+\frac{{K}_{i _ est}}{s}\right)$
where K_{p_est} is the observer proportional coefficient, and K_{i_est} is the observer integral coefficient.

The vibration suppression module 40 is configured to determine a compensation current command according to the observed torque, and control a motor system of the compressor to perform vibration suppression according to the compensation current command.

It should be noted that after the observed torque is obtained, the magnitude of the compensation current needs to be calculated according to the observed torque, and then the compensation current command is obtained based on the compensation current, so as to control the operation of the motor system according to the compensation current command, thereby realizing the decoupling of rotational speed control and suppressing the rotational speed fluctuation of the compressor during low-frequency operation.

To realize the calculation of the compensation current command, the vibration suppression module 40 is further configured to obtain a torque coefficient and a low-pass filter cutoff frequency of the compressor; and calculate the compensation current command according to the torque coefficient, the low-pass filter cutoff frequency and the observed torque.

The calculation formula of the compensation current command I_{q_com} is as follows:
${I}_{q _ com} = LPF \left(\frac{{T}_{L _ est}}{{K}_{T}}\right)$
where T_{L_est} is the observed torque, K_{T} is the torque coefficient, and the low-pass filter cutoff frequency (LPF) is ω₀.

In the embodiment, the observed rotational speed is determined through the position observer of the compressor; the estimated rotational speed is determined according to the quadrature-axis current command output by the speed loop PI regulator of the compressor; the observed torque is determined according to the observed rotational speed and the estimated rotational speed; the compensation current command is determined according to the observed torque, and the motor system of the compressor is controlled to perform vibration suppression according to the compensation current command. In this way, the compensation current command is calculated based on the observed rotational speed and the estimated rotational speed, so as to realize the decoupling of rotational speed control and suppress the rotational speed fluctuation of the compressor during low-frequency operation, which is of important engineering practical significance for improving the low-frequency operating range and load carrying capacity of the motor.

In an embodiment, the observed rotational speed calculation module 10 is further configured to collect an observer angle of the position observer; and calculate the observed rotational speed according to the observer angle.

In an embodiment, the estimated rotational speed calculation module 20 is further configured to determine a quadrature-axis current command through a speed loop PI regulator of the compressor; and calculate the estimated rotational speed according to the quadrature-axis current command.

In an embodiment, the estimated rotational speed calculation module 20 is further configured to determine a speed loop proportional coefficient and a speed loop integral coefficient according to the speed loop PI regulator of the compressor; obtain a rotational speed command and a feedback rotational speed; and calculate the quadrature-axis current command according to the speed loop proportional coefficient, the speed loop integral coefficient, the rotational speed command and the feedback rotational speed.

In an embodiment, the estimated rotational speed calculation module 20 is further configured to obtain a torque coefficient and a moment of inertia; and calculate the estimated rotational speed according to the torque coefficient, the moment of inertia and the quadrature-axis current command.

In an embodiment, the observed torque calculation module 30 is further configured to obtain an observer proportional coefficient and an observer integral coefficient of the position observer; and determine the observed torque according to the observer proportional coefficient, the observer integral coefficient, the observed rotational speed and the estimated rotational speed.

In an embodiment, the vibration suppression module 40 is further configured to obtain a torque coefficient and a low-pass filter cutoff frequency of the compressor; and calculate the compensation current command according to the torque coefficient, the low-pass filter cutoff frequency and the observed torque.

The above are only illustrative examples, and do not constitute any limitation to the technical solution of the present application. In specific application, those skilled in the art can make settings as required, which is not limited in the present application.

It should be noted that the above-described workflow is only schematic and does not limit the protection scope of the present application. In practical application, those skilled in the art may select part or all of the content to achieve the purpose of the solution of the embodiment as required, which is not limited herein.

In addition, it should be noted that in this document, the terms "include", "comprise" or any other variant thereof are intended to cover non-exclusive inclusion, such that a process, method, article or system including a series of elements not only includes those elements, but also includes other elements not explicitly listed, or elements inherent to such process, method, article or system. Without further limitation, an element defined by the phrase "including one ..." does not exclude the presence of other identical elements in the process, method, article or system that includes the element.

The sequence numbers of the embodiments of the present application described above are only for description, and do not represent the superiority or inferiority of the embodiments.

Through the description of the above embodiments, those skilled in the art can clearly understand that the above method of the present application can be implemented by means of software plus a necessary general hardware platform, and certainly can also be implemented by hardware, but in many cases, the former is a better implementation mode. Based on such understanding, the technical solution of the present application essentially or the part contributing to the related art can be embodied in the form of a software product. The computer software product is stored in a storage medium (such as Read Only Memory (ROM)/RAM, magnetic disk, optical disk), and includes several instructions to enable a terminal device (which may be a mobile phone, a computer, a server, or a network device, etc.) to execute the methods of each embodiment of the present application.

The above are only optional embodiments of the present application, and are not intended to limit the patent scope of the present application. Any equivalent structure or equivalent process transformation made according to the specification and accompanying drawings of the present application, or direct or indirect application in other related technical fields, shall be similarly included in the protection scope of the present application.

## Claims

1. A method for suppressing compressor vibration, comprising:
determining an observed rotational speed through a position observer of a compressor;
determining an estimated rotational speed according to a quadrature-axis current command output by a speed loop PI regulator of the compressor;
determining an observed torque according to the observed rotational speed and the estimated rotational speed; and
determining a compensation current command according to the observed torque, and controlling a motor system of the compressor to perform vibration suppression according to the compensation current command.

2. The method for suppressing compressor vibration according to claim 1, wherein the determining the observed rotational speed through the position observer of the compressor comprises:
collecting an observer angle of the position observer; and
calculating the observed rotational speed according to the observer angle.

3. The method for suppressing compressor vibration according to claim 1 or 2, wherein the determining the estimated rotational speed according to the quadrature-axis current command output by a speed loop PI regulator of the compressor comprises:
determining the quadrature-axis current command through the speed loop PI regulator of the compressor; and
calculating the estimated rotational speed according to the quadrature-axis current command.

4. The method for suppressing compressor vibration according to claim 3, wherein the determining the quadrature-axis current command through the speed loop PI regulator of the compressor comprises:
determining a speed loop proportional coefficient and a speed loop integral coefficient according to the speed loop PI regulator of the compressor;
obtaining a rotational speed command and a feedback rotational speed; and
calculating the quadrature-axis current command according to the speed loop proportional coefficient, the speed loop integral coefficient, the rotational speed command and the feedback rotational speed.

5. The method for suppressing compressor vibration according to claim 3 or 4, wherein the calculating the estimated rotational speed according to the quadrature-axis current command comprises:
obtaining a torque coefficient and a moment of inertia; and
calculating the estimated rotational speed according to the torque coefficient, the moment of inertia and the quadrature-axis current command.

6. The method for suppressing compressor vibration according to any one of claims 1 to 5, wherein the determining the observed torque according to the observed rotational speed and the estimated rotational speed comprises:
obtaining an observer proportional coefficient and an observer integral coefficient of the position observer; and
determining the observed torque according to the observer proportional coefficient, the observer integral coefficient, the observed rotational speed and the estimated rotational speed.

7. The method for suppressing compressor vibration according to any one of claims 1 to 6, wherein the determining the compensation current command according to the observed torque comprises:
obtaining a torque coefficient and a low-pass filter cutoff frequency of the compressor;
and
calculating the compensation current command according to the torque coefficient, the low-pass filter cutoff frequency and the observed torque.

8. An apparatus for suppressing compressor vibration, comprising:
an observed rotational speed calculation module, configured to determine an observed rotational speed through a position observer of a compressor;
an estimated rotational speed calculation module, configured to determine an estimated rotational speed according to a quadrature-axis current command output by a speed loop PI regulator of the compressor;
an observed torque calculation module, configured to determine an observed torque according to the observed rotational speed and the estimated rotational speed; and
a vibration suppression module, configured to determine a compensation current command according to the observed torque, and control a motor system of the compressor to perform vibration suppression according to the compensation current command.

9. A compressor, comprising:
a memory;
a processor; and
a compressor vibration suppression program stored in the memory and executable on the processor,
wherein the compressor vibration suppression program is configured to implement the method for suppressing compressor vibration according to any one of claims 1 to 7.

10. A storage medium, wherein a compressor vibration suppression program is stored on the storage medium, the compressor vibration suppression program, when executed by a processor, implements the method for suppressing compressor vibration according to any one of claims 1 to 7.
